(19) Europäisches Patentamt

European Patent Office

Office européen des brevets

(11) **EP 0 596 022 B1**

(12) **EUROPEAN PATENT SPECIFICATION**

(45) Date of publication and mention
of the grant of the patent:
**22.09.1999 Bulletin 1999/38**

(21) Application number: **92917029.8**

(22) Date of filing: **23.07.1992**

(51) Int Cl.⁶: **C10G 47/20**

(86) International application number:
**PCT/US92/06117**

(87) International publication number:
**WO 93/02160 (04.02.1993 Gazette 1993/04)**

(54) **PRODUCTION OF HYDROCRACKED LUBRICANTS**

PRODUKTION HYDROGEKRACHTER SCHMIERÖLE

PRODUCTION DE LUBRIFIANTS HYDROCRAQUES

(84) Designated Contracting States:
**BE DE FR GB IT NL**

(30) Priority: **24.07.1991 US 734971**
**24.07.1991 US 734999**

(43) Date of publication of application:
**11.05.1994 Bulletin 1994/19**

(73) Proprietor: **MOBIL OIL CORPORATION**
**Fairfax, Virginia 22037-0001 (US)**

(72) Inventors:
• **APELIAN, Minas, Robert**
**Vincentown, NJ 08088-8976 (US)**
• **DEGNAN, Thomas, Francis, Jr.**
**Moorestown, NJ 08057-2109 (US)**
• **MARLER, David, Owen**
**Deptford, Nj 08096-2557 (US)**
• **MAZZONE, Dominick, Nicholas**
**Wenonah, NJ 08090-1734 (US)**

(74) Representative: **Kador & Partner**
**Corneliusstrasse 15**
**80469 München (DE)**

(56) References cited:
**WO-A-91/11390**          **US-A- 4 919 788**
**US-A- 4 975 177**

## Description

This invention relates to the production of high viscosity index lubricants by hydrocracking mineral oil feedstocks, especially distillate stocks.

Mineral oil based lubricants are conventionally produced by a separative sequence carried out in the petroleum refinery which comprises fractionation of a paraffinic crude oil under atmospheric pressure followed by fractionation under vacuum to produce distillate fractions (neutral oils) and a residual fraction which, after deasphalting and severe solvent treatment may also be used as a lubricant basestock usually referred to as bright stock. Neutral oils, after solvent extraction to remove low viscosity index (V.I.) components are conventionally subjected to dewaxing, either by solvent or catalytic dewaxing processes, to the desired pour point, after which the dewaxed lubestock may be hydrofinished to improve stability and remove color bodies. This conventional technique relies upon the selection and use of crude stocks, usually of a paraffinic character, which produce the desired lube fractions of the desired qualities in adequate amounts. The range of permissible crude sources may, however, be extended by the lube hydrocracking process which is capable of utilizing crude stocks of marginal or poor quality, usually with a higher aromatic content than the best paraffinic crudes. The lube hydrocracking process, which is well established in the petroleum refining industry, generally comprises an initial hydrocracking step carried out under high pressure in the presence of a bifunctional catalyst which effects partial saturation and ring opening of the aromatic components which are present in the feed. The hydrocracked product is then subjected to dewaxing in order to each the target pour point since the products from the initial hydrocracking step which are paraffinic in character include components with a relatively high pour point which need to be removed in the dewaxing step.

In theory, as well as in practice, lubricants should be highly paraffinic in nature since paraffins possess the desirable combination of low viscosity and high viscosity index. Normal paraffins and slightly branched paraffins e.g. n-methyl paraffins, are waxy materials which confer an unacceptably high pour point on the lube stock and are therefore removed during the dewaxing operations in the conventional refining process described above. It is, however, possible to process waxy feeds in order to retain many of the benefits of their paraffinic character while overcoming the undesirable pour point characteristic. A severe hydrotreating process for manufacturing lube oils of high viscosity index is disclosed in Developments in Lubrication PD 19(2), 221-228, S. Bull et al, and in this process, waxy feeds such as waxy distillates, deasphalted oils and slack waxes are subjected to a two-stage hydroprocessing operation in which an initial hydrotreating unit processes the feeds in blocked operation with the first stage operating under higher temperature conditions to effect selective removal of the undesirable aromatic compounds by hydrocracking and hydrogenation. The second stage operates under relatively milder conditions of reduced temperature at which hydrogenation predominates, to adjust the total aromatic content and influence the distribution of aromatic types in the final product. The viscosity and flash point of the base oil are then controlled by topping in a subsequent redistillation step after which the pour point of the final base oil is controlled by dewaxing in a solvent dewaxing (MEK-toluene) unit. The slack waxes removed from the dewaxer may be reprocessed to produce a base oil of high viscosity index. Processes of this type, employing a waxy feed which is subjected to hydrocracking over an amorphous bifunctional catalyst such as nickel-tungsten on alumina or silica-alumina are disclosed, for example, in British Patents Nos. 1,429,494, 1,429,291 and 1,493,620 and U.S. Patents Nos. 3,830,273, 3,776,839, 3,794,580, and 3,682,813.

In processes of this kind, the hydrocracking catalyst is typically a bifunctional catalyst containing a metal hydrogenation component on an amorphous acidic support. The metal component is usually a combination of base metals, with one metal selected from the iron group (Group VIII) and one metal from Group VIB of the Periodic Table, for example, nickel in combination with molybdenum or tungsten. The activity of the catalyst may be increased by the use of fluorine, either by incorporation into the catalyst during its preparation in the form of a suitable fluorine compound or by in situ fluoriding during the operation of the process, as disclosed in GB 1,390,359.

Although the lube hydrocracking process using an amorphous catalyst for the treatment of the waxy feeds has shown itself to be capable of producing high V.I. lubricants, it is not without its limitations. In particular, there are environmental and metallurgical (corrosion) concerns asociated with the use of fluorine and other promoters used with these catalysts; the unfluorided catalysts do not have sufficient cracking activity to be commercially viable for these applications. While the amorphous catalysts are effective for the saturation of the aromatics under the high pressure conditions which are typically used in lube hydrocracking (139 bar - 2,000 psig) their activity and selectivity for isomerization of the paraffinic components is not as high as might be desired; the relatively straight chain paraffins are not, therefore, isomerized to the less waxy isoparaffins of relatively high viscosity index but with low pour point properties, to the extent required to fully meet product pour point specifications.

Crystalline materials, especially the large pore size zeolites such as zeolites X and Y, have been found to be useful for a number of hydrocracking applications since they have the advantage, as compared to the amorphous materials, of possessing a greater degree of activity, which enables the hydrocracking to be carried out at lower temperatures at which the accompanying hydrogenation reactions are thermodynamically favored. In addition, the crystalline catalysts tend to be more stable in operation than the amorphous materials such as alumina. The crystalline

2

materials may, however, not be suitable for all applications since even the largest pore sizes in these materials, typically 7.4 Å in the X and Y zeolites, are too small to permit access by various bulky species in the feed, such as the high molecular weight species in lube feeds. As a result, the crystalline zeolite catalysts, while very active for boiling range conversion, are not as selective in terms of high lube yield and yield selectivity. For these reasons, lube hydrocracking processes have not used the crystalline catalysts but, instead, have remained with the promoted amorphous catalysts.

One approach to the production of lubes from unconventional refinery streams using crystalline catalysts is disclosed in U.S. Patent Nos. 4,919,788 and 4,975,177. In this process, a zeolite beta catalyst is used to isomerize the high molecular weight paraffins contained in the back end of the feed to less waxy materials while minimizing cracking of these components to materials boiling outside the lube range. The waxy paraffins in the front end of the feed are removed in a subsequent dewaxing step, either solvent or catalytic, in order to achieve the target pour point. While this zeolite-catalyzed process has shown itself to be highly effective for dealing with waxy, highly paraffinic feeds, the high isomerization selectivity of the zeolite beta catalysts, coupled with its lesser capability to remove low quality aromatic components, has tended to limit the application of the process to feeds which contain relatively low quantities of aromatics.

In spite of their shortcomings, therefore, the amorphous catalysts have remained the catalysts of choice for lube hydrocracking even though from some points of view the crystalline zeolite catalysts would appear to offer advantages, at least, in some respects. Clearly, however, it would be desirable to develop a process for producing lubes from unconventional sources or from refinery streams of marginal or unacceptable quality. It would also be desirable to develop a lube hydrocracking process using a catalyst possessing the activity and stability of the crystalline materials coupled with the ability of the amorphous materials to handle the bulky molecular species associated with lube range feeds and products.

It has now been found that mesoporous siliceous materials may be used as the basis for hydrocracking catalysts of excellent properties. The catalysts based on these novel materials are capable of functioning as highly effective lube hydrocracking (LHDC) catalysts and of producing high VI lubricating oils without the use of promoters such as fluorine.

These mesoporous siliceous materials have a novel and unique pore geometry and, in a preferred form described below, are characterized by a substantially uniform hexagonal honeycomb microstructure with uniform pores having a cell diameter greater than 13 Å and typically in the range of 20 to 100 Å. Most prominent among these materials is a new metallosilicate identified as MCM-41 which is usually synthesized with Bronsted acid sites by incorporating a tetrahedrally coordinated trivalent element such as Al, Ga, B, or Fe within the silicate framework. Aluminosilicate materials of this type possess good thermal and chemical stability and may be used as the basis for LHDC catalysts which exhibit the correct balance of hydrocracking activity and aromatic saturation selectivity to produce conventional VI lubricating oils (i.e. 75-100 VI) in higher lube yields compared to unpromoted USY and amorphous catalysts. Furthermore, the present catalysts exhibit improved conversion activity compared to conventional amorphous fluorided catalysts with only a slight penalty in lube yield/VI selectivity. Thus, the present process involves lube hydrocracking (LHDC) heavy distillates utilizing unpromoted (without the addition of flourine) ultra large pore size molecular sieve catalysts to produce high VI lubricating oils.

The unpromoted LHDC catalysts based on the mesoporous crystalline materials, as described below, for example, NiW/MCM-41, have the correct balance of cracking activity and lube yield/VI selectivity to make them very attractive alternatives to current flourided NiW/alumina catalysts. The present mesoporous catalysts result in higher lube yield/VI selectivity compared to USY and unfluorided amorphous catalysts and they also have very good activity compared to the amorphous catalysts in the same application.

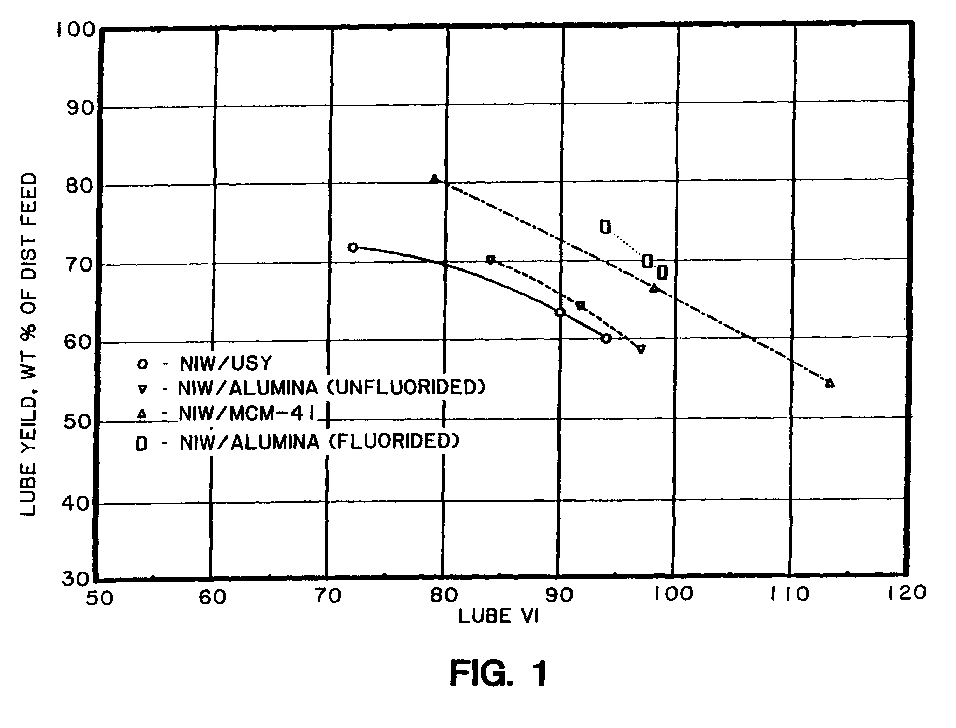

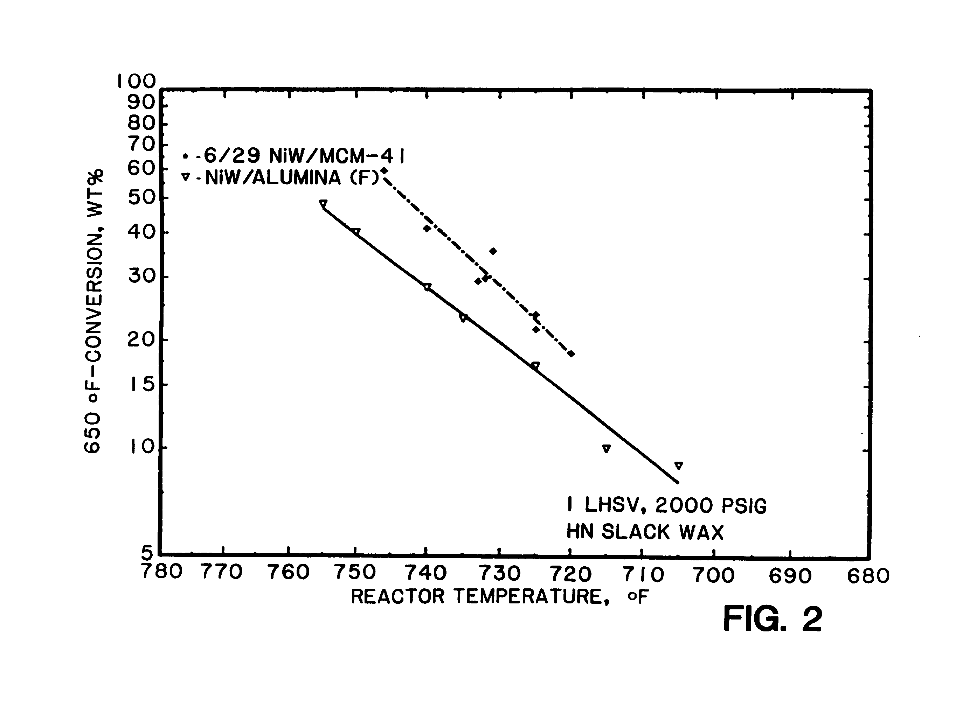

Figure 1 of the accompanying drawings is a graph showing the relationship between lube yield and product VI for lube products produced by hydrocracking a distillate feed with various catalysts, as described below in the Examples. Figures 2-5 are graphs which illustrate the relationship between process and product characteristics for lube products produced by the hydrocracking and hydroisomerization of a wax feed with various catalysts.

The feedstock for the present process may generally be characterized as a lube fraction prepared from a crude stock of suitable characteristics. In the direct production of lube stocks from crude, the crude will be subjected to various conventional processes such as distillation in atmospheric and vacuum towers in order to obtain a fraction of the requisite boiling point which may be used as the feed in the present process; in conventional lube processing, the distillate is subjected to removal of the aromatics using a suitable solvent, using a solvent such as phenol, furfural, NMP or another conventional type of solvent for this purpose. If the lube stock is a residual lube stock, removal of asphaltenes and some aromatics will generally be effected in a deasphalting operation, e.g. a propane deasphalting (PDA) step, as is conventional for the production of residual lube stocks such as bright stock. The deasphalted oil (DAO) from the deasphalting operation is a suitable feed for the present process. After deasphalting, a solvent extraction may be used to reduce the residual aromatics concentration. At this point, the lube stock will typically have a boiling point above 345°C (650°F) except for the lightest lubes but the lube stocks which may be used are generally characterized in terms of their viscosity rather than their boiling ranges since this is a more important characteristic for a lubricant. Generally, if the lube base stock is a distillate base stock, i.e. a neutral stock, it will have a viscosity in the range of 100 to 750 SUS (20 to 160 mm$^2$/s) at 40°C (99°F) and in the case of a bright stock, the viscosity will generally be in the range of 1000 to 3000 SUS (210 to 600 mm$^2$/s) at 99°C (210°F). The light neutral stocks are generally characterized by their Saybolt viscosity at 40°C, e.g. as a 100 second neutral which has a viscosity of 100 SUS at 40°C (20 mm$^2$/s) a 300 second neutral has a viscosity of 300 SUS at 40°C (65 mm$^2$/s) and a heavy neutral will typically have a viscosity of up to 750 SUS (160 mm$^2$/s).

However, these specific viscosities and viscosity ranges are not critical but will depend upon the appropriate uses for which the lubricants are to be put. They are quoted here as exemplary of the types of lube stocks to which the present process may be applied.

The distillate (neutral) base stocks may generally be characterized as paraffinic in character, although they also contain naphthenes and aromatics and because of their paraffinic character, they are generally of fairly low viscosity and high viscosity index. The distillates may be of high sulfur and nitrogen content, for example, containing from 800 to 1000 ppmw nitrogen and up to 1 to 3 wt.% sulfur. The wax contant of the ditillate is typically from 10 to 15 wt. % but, as discussed below, high wax contants are not undesirable since waxy feeds are capable of producing hydrocracked products with extremely high VI values. The residual stocks obtained from DAO will be more aromatic in character and for this reason will generally have higher viscosities and lower viscosity indices. In general, the aromatic content of the stock will be in the range of 10 to 70 wt.%, usually 15 to 60 wt.% with the residual stocks having the relatively higher aromatic contents, typically 20 to 70 wt.%, more commonly 30 to 60 wt.% and the distillate stocks having lower aromatic contents, for instance, 10 to 30 wt.%. Nitrogen and sulfur contents will characterisically be higher than with the distillate stocks. Fractions in the gas oil boiling range (315°C+ (600°F+)) with an end point usually below 565°C (1050°F) are a convenient feed because they can generally be treated by the present process to produce high quality lubes.

In addition to lube stocks produced directly from crudes, as described above, the hydrocracking process may be adapted to the use of other petroleum refinery streams of suitable characteristics and refining them so as to produce lubricants of extremely good properties. In particular, it is capable of producing lubricants from a feed comprising a petroleum wax containing at least 30, and preferably at least 50, wt.% wax, as determined by ASTM test D-3235. In these feeds of mineral oil origin, the waxes are mostly paraffins of high pour point, comprising straight chain and slightly branched chain paraffins such as methylparaffins. Product quality and yield are directly related to the feed wax content in that a high wax level in the feed can be converted into a high level of high VI, low pour, iso-paraffins in the product while maintaining a high lube (343°C+) (650°F+) yield. Lower wax levels in the feed imply a higher oil (non-wax) content and because the oil contains components of lower lube quality, mostly cyclic materials such as aromatics and polynaphthenes, this translates into a lower product quality unless these low quality components are removed, implying a lower yield. For these reasons, the use of the high wax content (50 percent minimum wax) feeds is preferred but not indispensable at the expense of product quality or yield.

Petroleum waxes, that is, waxes of paraffinic character are derived from the refining of petroleum and other liquids by physical separation from a wax-containing refinery stream, usually by chilling the stream to a temperature at which the wax separates, usually by solvent dewaxing, e.g., MEK/toluene dewaxing or by means of an autorefrigerant process such as propane dewaxing. These waxes have high initial boiling points above 345°C (650°F) which render them extremely useful for processing into lubricants which also require an initial boiling point of at least 345°C (650°F). The presence of lower boiling components is not to be excluded since they will be removed together with products of similar boiling range produced during the processing during the separation steps which follow the characteristic processing steps. Since these components will, however, load up the process units they are preferably excluded by suitable choice of feed cut point. The end point of wax feeds derived from the solvent dewaxing of neutral oils, i.e. distillate fractions produced by the vacuum distillation of long or atmospheric resids, will usually be not more than 595°C (1100°F) so that they may normally be classified as distillate rather than residual streams but high boiling wax feeds such as petrolatum waxes, i.e. the waxes separated from bright stock dewaxing, which may typically have an end point of up to 705°C (1300°F), may also be employed.

The wax content of the feed is high, at least 30, more usually at least 50 wt.% for lube products with a VI of at least 135 or higher. Normally, for the highest quality products, feeds with a wax content of 60 to 80 wt.% are preferred. The balance in each case is from occluded oil comprising iso-paraffins, aromatics and naphthenics. The non-wax content of aromatics, polynaphthenes and highly branched naphthenes will normally not exceed 40 wt.% of the wax and preferably will not exceed 25 to 30 wt.%. These waxy, highly paraffinic wax stocks usually have low viscosities because of their relatively low content of aromatics and naphthenes although the high content of waxy paraffins gives them melting points and pour points which render them unacceptable as lubricants without further processing.

Feeds of this type will normally be slack waxes, that is, the waxy product obtained directly from a solvent dewaxing process, e.g. an MEK or propane dewaxing process. The slack wax, which is a solid to semi-solid product, comprising mostly highly waxy paraffins (mostly n- and mono-methyl paraffins) together with occluded oil, may be fed directly to the first step of the present processing sequence as described below without the requirement for any initial preparation, for example, by hydrotreating.

The compositions of some typical waxes are given in Table 1 below.

Table 1

| Wax Composition - Arab Light Crude | | | | |
|---|---|---|---|---|
| | A | B | C | D |
| Paraffins, wt.% | 94.2 | 81.8 | 70.5 | 51.4 |
| Mono-naphthenes, wt.% | 2.6 | 11.0 | 6.3 | 16.5 |
| Poly-naphthenes, wt.% | 2.2 | 3.2 | 7.9 | 9.9 |
| Aromatics, wt.% | 1.0 | 4.0 | 15.3 | 22.2 |

A typical slack wax feed has the composition shown in Table 2 below. This slack wax is obtained from the solvent (MEK) dewaxing of a 300 SUS (65 cST) neutral oil obtained from an Arab Light crude.

## Table 2

### Slack Wax Properties

| | |
|---|---|
| API | 39 |
| Hydrogen, wt.% | 15.14 |
| Sulfur, wt.% | 0.18 |
| Nitrogen, ppmw | 11 |
| Melting point, °C (°F) | 57 (135) |
| KV at 100°C, cSt | 5.168 |
| PNA, wt.%: | |
| Paraffins | 70.3 |
| Naphthenes | 13.6 |
| Aromatics | 16.3 |

Simulated Distillation:

| % | °C | (°F) |
|---|---|---|
| 5 | 375 | (710) |
| 10 | 413 | (775) |
| 30 | 440 | (825) |
| 50 | 460 | (860) |
| 70 | 482 | (900) |
| 90 | 500 | (932) |
| 95 | 507 | (945) |

Another slack wax suitable for use in the present process has the properties set out in Table 3 below. This wax is prepared by the solvent dewaxing of a 450 SUS (100 cS) neutral raffinate:

Table 3

| Slack Wax Properties | |
|---|---|
| Boiling range, °F(°C) API 35.2 | 708-1053 (375-567) |

Table 3   (continued)

| Slack Wax Properties | |
|---|---|
| Nitrogen, basic, ppmw | 23 |
| Nitrogen, total, ppmw | 28 |
| Sulfur, wt.% | 0.115 |
| Hydrogen, wt.% | 14.04 |
| Pour point, °F (°C) | 120 (50) |
| KV (100°C) | 7.025 |
| KV (300°F, 150°C) | 3.227 |
| Oil (D 3235) | 35 |
| Molecular wt. | 539 |
| P/N/A: | |
| Paraffins | - |
| Naphthenes | - |
| Aromatics | 10 |

Slack waxes will normally contain from 30 to 80 ppmw of nitrogen with an oil content of 20 to 40 wt.%. They may be processed to give dewaxed lube products with a VI of at least 135, often from 140 to 145 or even higher.

A typical highly paraffinic fraction which may be treated by the present process to form a high quality, high VI lube is a 345°-540°C (650°-1000°F) Minas gas oil having the properties set out in Table 4 below.

Table 4

| Minas Gas Oil | |
|---|---|
| Normal boiling range, °C | (°F) 345°-540° (650°-1000°) |
| API Gravity | 33.0 |
| Hydrogen, wt.% | 13.6 |
| Sulfur, wt.% | 0.07 |
| Nitrogen, ppmw | 320 |
| Basic Nitrogen, ppmw | 160 |
| CCR | 0.04 |
| Composition, wt.% | |
| Paraffins | 60 |
| Naphthenes | 23 |
| Aromatics | 17 |
| Bromine No. | 0.8 |
| KV, 100°C, mm$^2$/s | 4.18 |
| Pour Point, °C (°F) | 46 (115) |
| 95% TBP, °C (°F) | 510 (950) |

The feed may be hydrotreated before the hydrocracking/hydroisomerization step in order to remove heteroatom containing impurities and to hydrogenate at least some of the aromatics which may be present to form naphthenes. For de-oiled waxes, however, this pre-treatment will not normally be necessary since the removal of the occluded oil will remove many of the deleterious materials in the foots oil. Inorganic nitrogen and sulfur formed during the hydrotreating may be removed by a conventional separation prior to the catalytic dewaxing. Conventional hydrotreating catalysts and conditions are suitably used. Catalysts typically comprise a base metal hydrogenation component such as nickel, tungsten, cobalt, nickel-tungsten, nickel-molybdenum or cobalt-molybdenum, on an inorganic oxide support of low acidity such as silica, alumina or silica-alumina, generally of a large pore, amorphous character. Typical hydrotreating conditions use moderate temperatures and pressures, e.g. 290°-425°C (550°-800°F), typically 345°-400°C (650°-750°F), up to 20,000 kPa (3000 psig), typically 4250-14000 kPa (600-2000 psig) hydrogen pressure, space velocity of 0.3-2.0, typically 1 LHSV, with hydrogen circulation rates typically 600-1800 n.1.1.$^{-1}$ (3,370 to 10,100 SCF/Bbl) usually 1,300 n.1.1.$^{-1}$ (7,300 SCF/Bbl). The severity of the hydrotreating step should be selected according to the characteristics of the feed; the objectives being to reduce residual aromatic content by saturation to form naphthenes so as to make initial improvements in lube quality by removal of aromatics and formation of naphthenes, as well as to remove heteroatom-containing impurities, especially sulfur, in order to improve the color and oxidative stability of the final lube products. The hydrotreating severity will therefore usually be greater with residual lube stocks such as bright stock because of their relatively high aromatic and sulfur contents.

The feed to the hydrocracking reactor is processed in the presence of hydrogen in the presence of the ultra-large pore size catalyst.

The feedstock is heated to an elevated temperature and is then passed over the hydrocracking/ hydroisomerization catalysts in the presence of hydrogen. The objective of the process is primarily to saturate aromatics and to carry out hydrocracking of the oil and waxes, with isomerization of the waxes to lower pour point iso-paraffins. The large pore structure of the present crystalline catalysts is well adapted to these ends because it permits ready access to the metal sites where hydrogenation takes place and also permits high metals loading on the support which favors the hydrogenation reactions. Because the thermodynamics of hydrocracking become unfavorable at temperatures above 450°C (850°F) temperatures above this value will not normally be used. The exact temperature chosen will depend on the activity of the catalyst selected and on the feed and product qualities which, in turn, set the appropriate conversion. Thus, the temperature should be selected empirically after consideration of the relevant factors. The hydrotreating and hydrocracking reactions are net exothermic and for this reason, the feedstock need not be heated to the temperature desired in the catalyst bed which is normally in the range 290°, usually 360°C, to 440°C (550°, usually, 675° to 825°F). In many cases, temperatures from 700° to 750°F (370° to 400°C) will be suitable for most wax feeds. At the beginning of the process cycle, the temperature employed will be at the lower end of this range but as the catalyst ages, the temperature may be increased in order to maintain the desired degree of activity.

The feedstock is passed over the catalysts in the presence of hydrogen. The space velocity of the heavy oil is usually in the range 0.1 to 10 LHSV, preferably 0.2 to 2.0 LHSV and the hydrogen circulation rate from 250 to 1,500 n.1.1 $^{-1}$. (1400 to 8,427 SCF/bbl) and more usually from 300 to 800 (1685 to 4500 SCF/bbl). Wax feeds can be operated at a higher space velocity, typically 1 to 2 LHSV and a hydrogen circulation rate of from 250 to 1500 n.1.1 $^{-1}$ (1400 to 8427 SCF/bbl) and more usually from 300 to 900 n.1.1.$^{-1}$ (1685 to 5050 SCF/bbl). For distillates, the preferred range is 0.5 to 0.75. Hydrogen partial pressure is usually at least 75 percent of the total system pressure with reactor inlet pressures normally being in the range of 3000 to 30,000 kPa (420 to 4,335 psig). High pressure operation is normally preferred in order to saturate aromatics and to facilitate the formation of the more desirable naphthenes and paraffins. Pressures will therefore usually be at least 8,400 kPa (1200 psig) and often above 15,000 kPa (2160 psig), most often in the range of 10,000 to 18,000 kPa (1435 to 2600 psig). Conversion to products boiling outside the lube range, typically to 345°C- (about 650°F-) products, is normally from 5 to 70 volume percent, more usually from 10 to 40 volume percent, depending on the feed and the target VI for the product. With distillate feeds, the boiling range conversion will typically be in the range of 15 to 40 percent for products with a target VI (dewaxed product) of 120 with lower boiling range conversions in the range of 15 to 25 percent appropriate for products in the 95 - 100 VI range. For slack waw feeds, the boiling range conversion will typically be in the rnge of 25 to 35 percent for dewaxed products with a target VI of 135 or higher. Product VI will therefore usually be from 95 to 140.

For wax feeds, pressures will usually be at least 1,000 psig (7,000 kPa Abs) up to 3,000 psig (20,000 kPa), usually from 1435 psig (10,000 kPa) to 2600 psig (18,000 kPa abs). Conversion to products boiling outside the lube range, typically to 343°C- (650°F-) products, is normally at least 15 percent, and usually from 25 to 60, usually 25 to 35 percent, for dewaxed products with a target VI of 135 or higher. Boiling point conversion (for 343°C- (650.F-) is defined as:

$$343°C\text{- }(650°F\text{-})\text{ conversion} = \frac{343°C\text{+ }(650°F\text{+})\text{ in Feed } -343°C(650°F\text{+})\text{ in Product}}{343°C\text{+ }(650°F\text{+})\text{ in Feed}}$$

The wax conversion will be from 10 to 90 percent but is preferably in the range of 50 to 70 wt.% for products with a VI of at least 135 and usually at leat 140. Wax conversion is defined as:

$$\text{Wax Conversion} = \frac{\text{Wt\% Wax in Feed - Wt.\% Uncoverted Wax after Solvent Dewaxing)}}{\text{Wt.\% Wax in Feed}}$$

The hydrocracked/hydroisomerized (HDC/HDI) product may be dewaxed if necessary to target pour point after the HDC/HDI step. A notable feature of the present process that the extent of dewaxing required is relatively small. Typically, the loss during the final dewaxing step will be no more than 15 to 20 wt.% of the dewaxer feed and may be lower. Either catalytic dewaxing or solvent dewaxing may be used at this point and if a solvent dewaxer is used, the removed wax may be recycled to the first or second stages of the process for further treatment. Since the wax removed in a solvent dewaxer is highly paraffinic, it may be recycled directly to the second stage if this is feasible, for example, in the embodiment where the second stage is operated at a relatively low pressure.

The preferred catalytic dewaxing processes utilize an intermediate pore size zeolite such as ZSM-5, but the most preferred dewaxing catalysts are based on the highly constrained intermediate pore size zeolites such as ZSM-22, ZSM-23 or ZSM-35, since these zeolites have been found to provide highly selective dewaxing, giving dewaxed products of low pour point and high VI. Dewaxing processes using these zeolites are described in U.S. Patent Nos. 4,222,855. The zeolites whose use is preferred here may be characterized in the same way as described in U.S. 4,222,855, i.e. as zeolites having pore openings which result in the the possession of defined sorption properties set out in the patent, namely, (1) a ratio of sorption of n-hexane to o-xylene, on a volume percent basis, of greater than 3, which sorption is determined at a $P/P_o$ of 0.1 and at a temperature of 50°C for n-hexane and 80°C for o-xylene and (2) by the ability of selectively cracking 3-methylpentane (3MP) in preference to the doubly branched 2,3-dimethylbutane (DMB) at 1000°F and 1 atmosphere pressure from a 1/1/1 weight ratio mixture of n-hexane/3-methyl-pentane/2,3-dimethylbutane, with the ratio of rate constants $k_{3MP}/k_{DMB}$ determined at a temperature of 1000°F being in excess of 2. The expression, "$P/P_o$", is accorded its usual significance as described in the literature, for example, in "The Dynamical Character of Adsorption" by J.H. deBoer, 2nd Edition, Oxford University Press (1968) and is the relative pressure defined as the ratio of the partial pressure of sorbate to the vapor pressure of sorbate at the temperature of sorption. The ratio of the rate constants, $k_{3MP}/k_{DMB}$, is determined from 1st order kinetics, in the usual manner, by the following equation:

$$k = (1/T_c) \ln 1/(1-\varepsilon)$$

where k is the rate constant for each component, $T_c$ is the contact time and $\varepsilon$ is the fractional conversion of each component.

Zeolites conforming to these sorption requirements include the naturally occurring zeolite ferrierite as well as the known synthetic zeolites ZSM-22, ZSM-23 and ZSM-35. These zeolites are at least partly in the acid or hydrogen form when they are used in the dewaxing process and a metal hydrogenation component, preferably a noble metal such as platinum is preferable used. Excellent results have been obtained with a Pt/ZSM-23 dewaxing catalyst.

The hydrocracking/hydroisomerization catalyst is a bifunctional catalyst which comprises a mesoporous crystalline material as described below as the component which acts as a support and in addition, provides the desired acidic functionality for the hydrocracking reactions, together with a hydrogenation-dehydrogenation component. The hydrogenation-dehydrogenation component is provided by a metal or combination of metals. Noble metals of Group VIIIA, especially platinum and palladium may be used where the level of sulfur and other contaminants in the feed to the HDC/HDI step permits or, alternatively, base metals may be used. Base metals of Groups IVA, VIA and VIIIA, especially chromium, molybdenum, tungsten, cobalt and nickel, may be used. Base metal combinations, especially a combination of a Group VIII A metal with Group IV A or VI A metal, such as nickel-molybdenum, cobalt-nickel, nickel-tungsten, cobalt-nickel-molybdenum and nickel-tungsten-titanium are useful, although for certain applications platinum is preferred.

The content of the metal component will vary according to its catalytic activity. Thus, the highly active noble metals may be used in smaller amounts than the less active base metals. For example, 1 wt.% or less platinum will be effective and in a preferred base metal combination, 7 wt.% nickel and 2.1 to 40 wt.% tungsten, expressed as metal. The present support materials are, however, notable in that they are capable of including a greater proportion of metal than previous support materials because of their extraordinarily large surface area. The metal component may exceed 25 percent and still maintain a high surface area above 200 $m^2 g^{-1}$. The hydrogenation component can be exchanged onto the support material, impregnated into it or physically admixed with it. If the metal is to be impregnated into or exchanged onto the mesoporous support, it may be done, for example, by treating the zeolite with a platinum metal-containing ion. Suitable platinum compounds include chloroplatinic acid, platinous chloride and various compounds containing the platinum ammine complex. The metal compounds may be either compounds in which the metal is present in the cation of the compound and compounds in which it is present in the anion of the compound. Both types of compounds can be used. Platinum compounds in which the metal is in the form of a cation of cationic complex, e.g., $Pt(NH_3)_4Cl_2$ are particularly useful, as are anionic complexes such as the vanadate and metatungstate ions. Cationic forms of other metals are also very useful since they may be exchanged onto the crystalline material or impregnated into it.

The acidic component of the hydrocracking/hydroisomerization catalyst is a mesoporous crystalline material which is described in detail below. When it is used in the present catalysts, the mesoporus crystalline material is at least partly in the decationized or hydrogen form in order to provide the desired acidic functionality for the cracking reactions which are to take place.

The mesoporous catalytic material is an inorganic, porous, non-layered crystalline phase material which can be characterized (in its calcined form) by an X-ray diffraction pattern with at least one peak at a d-spacing greater than 18 Å with a relative intensity of 100 and a benzene sorption capacity of greater than 15 grams of benzene per 100 grams of the material at 6.7 kPa (50 Torr) and 25°C.

The preferred form of the crystalline material has a hexagonal arrangement of uniformly-sized pores with a maximum perpendicular cross-section pore dimension of at least 1.3 nm (13 Å (Å)), and typically within the range of from 1.3 to 20 nm (13 Å to 200 Å). A preferred form of this hexagonal crystalline composition, identified as MCM-41, exhibits a hexagonal electron diffraction pattern that can be indexed with a $d_{100}$ value greater than 1.8 nm (18 Å), and a benzene adsorption capacity of greater than 15 grams benzene/100 grams crystal at 6.7 kPa (50 Torr) and 25°C. This material is described in detail in Serial No. 07/625,245 and below.

The inorganic, non-layered mesoporous crystalline material used as a component of the catalyst has the following composition:

$$M_{n/q}(W_a\ X_b\ Y_c\ Z_d\ O_h)$$

wherein W is a divalent element, such as a divalent first row transition metal, e.g. manganese, cobalt and iron, and/or magnesium, preferably cobalt; X is a trivalent element, such as aluminum, boron, iron and/or gallium, preferably aluminum; Y is a tetravalent element such as silicon and/or germanium, preferably silicon; Z is a pentavalent element, such as phosphorus; M is one or more ions, such as, for example, ammonium, Group IA, IIA and VIIB ions, usually hydrogen, sodium and/or fluoride ions; n is the charge of the composition excluding M expressed as oxides; q is the weighted molar average valence of M; n/q is the number of moles or mole fraction of M; a, b, c, and d are mole fractions of W, X, Y and Z, respectively; h is a number of from 1 to 2.5; and (a+b+c+d) = 1.

A preferred embodiment of the above crystalline material is when (a+b+c) is greater than d, and h = 2. A further embodiment is when a and d = 0, and h = 2. The preferred materials for use in making the present hydrocracking catalysts are the aluminosilicates.

In the as-synthesized form, the catalytic material has a composition, on an anhydrous basis, expressed empirically as follows:

$$rRM_{n/q}(W_a\ X_b\ Y_c\ Z_d\ O_h)$$

where R is the total organic material not included in M as an ion, and r is the coefficient for R, i.e. the number of moles or mole fraction of R.

The M and R components are associated with the material as a result of their presence during crystallization, and are easily removed or, in the case of M, replaced by post-crystallization methods described below.

To the extent desired, the original M, e.g. sodium or chloride, ions of the as-synthesized material of this invention can be replaced in accordance with conventional ion-exchange techniques. Preferred replacing ions include metal ions, hydrogen ions, hydrogen precursor, e.g. ammonium, ions and mixtures of these ions. Particularly preferred ions are those which provide the desired metal functionality in the final hydrocracking catalyst. These include hydrogen, rare earth metals and metals of Groups VIIA (e.g. Mn), VIIIA (e.g. Ni),IB (e.g. Cu), IVB (e.g. Sn) of the Periodic Table of the Elements and mixtures of these ions.

The crystalline (i.e. having sufficient order to provide a diffraction pattern such as, for example, by X-ray, electron or neutron diffraction, following calcination with at least one peak) mesoporous material may be characterized by its structure, which includes extremely large pore windows as well as by its high sorption capacity. The term "mesoporous" is used here to indicate crystals having uniform pores within the range of from 13 Å to 200 Å. The mesoporous materials have uniform pores within the range of from 13 Å to 200 Å, more usually from 15 Å to 100 Å. Since these pores are significantly larger than those of other crystalline materials, it is appropriate to refer to them as ultra-large pore size materials. For the purposes of this application, a working definition of "porous" is a material that adsorbs at least 1 gram of a small molecule, such as Ar, $N_2$, n-hexane or cyclohexane, per 100 grams of the solid.

The catalytic material can be distinguished from other porous inorganic solids by the regularity of its large open pores, whose pore size more nearly resembles that of amorphous or paracrystalline materials, but whose regular arrangement and uniformity of size (pore size distribution within a single phase of, for example, ± 25%, usually ± 15% or less of the average pore size of that phase) resemble more those of crystalline framework materials such as zeolites. The preferred materials have a hexagonal arrangement of large open channels that can be synthesized with open internal diameters from 13 Å to 200 Å. The term "hexagonal" is intended to encompass not only materials that exhibit mathematically perfect hexagonal symmetry within the limits of experimental measurement, but also those with significant observable deviations from that ideal state. A working definition as applied to the microstructure of the present invention would be that most channels in the material would be surrounded by six nearest neighbor channels at roughly the same distance. Defects and imperfections will cause significant numbers of channels to violate this criterion to varying degrees, depending on the quality of the material's preparation. Samples which exhibit as much as ± 25% random deviation from the average repeat distance between adjacent channels still clearly give recognizable images of the present ultra-large pore materials. Comparable variations are also observed in the $d_{100}$ values from the electron diffraction patterns.

The most regular preparations of the material of the present invention give an X-ray diffraction pattern with a few distinct maxima in the extreme low angle region. The positions of these peaks approximately fit the positions of the hkO reflections from a hexagonal lattice. The X-ray diffraction pattern, however, is not always a sufficient indicator of the presence of these materials, as the degree of regularity in the microstructure and the extent of repetition of the structure within individual particles affect the number of peaks that will be observed. Indeed, preparations with only one distinct peak in the low angle region of the X-ray diffraction pattern have been found to contain substantial amounts of the material in them. Other techniques to illustrate the microstructure of this material are transmission electron microscopy and electron diffraction. Properly oriented specimens of the material show a hexagonal arrangement of large channels and the corresponding electron diffraction pattern gives an approximately hexagonal arrangement of diffraction maxima. The $d_{100}$ spacing of the electron diffraction patterns is the distance between adjacent spots on the hko projection of the hexagonal lattice and is related to the repeat distance $a_0$ between channels observed in the electron micrographs through the formula $d_{100} = a_0\sqrt{3}/2$. This $d_{100}$ spacing observed in the electron diffraction patterns corresponds to the d-spacing of a low angle peak in the X-ray diffraction pattern of the material. The most highly ordered preparations of the material obtained so far have 20-40 distinct spots observable in the electron diffraction patterns. These patterns can be indexed with the hexagonal hkO subset of unique reflections of 100, 110, 200, 210, etc., and their symmetry-related reflections.

In its calcined form, the crystalline material may be further characterized by an X-ray diffraction pattern with at least one peak at a position greater than 18 Angstrom Units d-spacing (4.909° $2\Theta$ for Cu K-alpha radiation) which corresponds to the $d_{100}$ value of the electron diffraction pattern of the material, and an equilibrium benzene adsorption capacity of greater than 15 grams benzene/100 grams crystal at 50 torr and 25°C (basis: crystal material having been treated in an attempt to insure no pore blockage by incidental contaminants, if necessary).

The equilibrium benzene adsorption capacity characteristic of this material is measured on the basis of no pore blockage by incidental contaminants. For instance, the sorption test will be conducted on the crystalline material phase having any pore blockage contaminants and water removed by ordinary methods. Water may be removed by dehydration techniques, e.g. thermal-treatment. Pore blocking inorganic amorphous materials, e.g. silica, and organics may be removed by contact with acid or base or other chemical agents such that the detrital material will be removed without detrimental effect on the crystal.

More particularly, the calcined crystalline non-layered material may be characterized by an X-ray diffraction pattern with at least two peaks at positions greater than 10 Angstrom Units d-spacing (8.842 °$\Theta$ for Cu K-alpha radiation), at least one of which is at a position greater than 18 Angstrom Units d-spacing, and no peaks at positions less than 10 Å d-spacing with relative intensity greater than 20% of the strongest peak. Still more particularly, the X-ray diffraction pattern of the calcined material of this invention will have no peaks at positions less than 10 Å d-spacing with relative intensity greater than 10% of the strongest peak. In any event, at least one peak in the X-ray diffraction pattern will have a d-spacing that corresponds to the $d_{100}$ value of the electron diffraction pattern of the material.

The calcined inorganic, non-layered crystalline material may also be characterized as having a pore size of 13 Å or greater as measured by physisorption measurements, described below. Pore size is considered a maximum perpendicular cross-section pore dimension of the crystal.

X-ray diffraction data were collected on a Scintag PAD X automated diffraction system employing theta-theta geometry, Cu K-alpha radiation, and an energy dispersive X-ray detector. Use of the energy dispersive X-ray detector eliminated the need for incident or diffracted beam monochromators. Both the incident and diffracted X-ray beams were collimated by double slit incident and diffracted collimation systems.- The slit sizes used, starting from the X-ray tube source, were 0.5, 1.0, 0.3 and 0.2 mm, respectively. Different slit systems may produce differing intensities for the peaks. The materials of the present invention that have the largest pore sizes may require more highly collimated incident X-ray beams in order to resolve the low angle peak from the transmitted incident X-ray beam.

The diffraction data were recorded by step-scanning at 0.04 degrees of $2\Theta$, where $\Theta$ is the Bragg angle, and a counting time of 10 seconds for each step. The interplanar spacings, d's, were calculated in Å (A), and the relative intensities of the lines, $I/I_o$, where $I_o$ is one-hundredth of the intensity of the strongest line, above background, were derived with the use of a profile fitting routine. The intensities were uncorrected for Lorentz and polarization effects. The relative intensities are given in terms of the symbols vs = very strong (75-100), s = strong (50-74), m = medium (25-49) and w = weak (0-24). The diffraction data listed as single lines may consist of multiple overlapping lines which under certain conditions, such as very high experimental resolution or crystallographic changes, may appear as resolved or partially resolved lines. Typically, crystallographic changes can include minor changes in unit cell parameters and/or a change in crystal symmetry, without a substantial change in structure. These minor effects, including changes in relative intensities, can also occur as a result of differences in cation content, framework composition, nature and degree of pore filling, thermal and/or hydrothermal history, and peak width/shape variations due to particle size/shape effects, structural disorder or other factors known to those skilled in the art of X-ray diffraction.

The equilibrium benzene adsorption capacity is determined by contacting the material of the invention, after dehydration or calcination at, for example, 540°C for at least one hour and other treatment, if necessary, in an attempt to remove any pore blocking contaminants, at 25°C and 6.7 kPa (50 torr) benzene until equilibrium is reached. The weight of benzene sorbed is then determined as described below.

The ammonium form of the catalytic material may be readily converted to the hydrogen form by thermal treatment (calcination). This thermal treatment is generally performed by heating one of these forms at a temperature of at least 400°C for at least 1 minute and generally not longer than 20 hours, preferably from 1 to 10 hours. While subatmospheric pressure can be employed for the thermal treatment, atmospheric pressure is desired for reasons of convenience, such as in air, nitrogen, ammonia, etc. The thermal treatment can be performed at a temperature up to 750°C. The thermally treated product is particularly useful in the catalysis of certain hydrocarbon conversion reactions.

The crystalline material can be prepared by one of several methods, each with particular limitations. First, second, third and fourth methods of preparing it are extensively described in arm prior specification US-A-5,098,684, and are also illustrated in the Examples thereof.

The crystals prepared by the synthesis procedure can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

The size of the pores in the present mesoporous catalytic materials is large enough that the spatiospecific selectivity with respect to transition state species in reactions such as cracking is minimized (Chen et al., "Shape Selective Catalysis in Industrial Applications", 36 CHEMICAL INDUSTRIES, pgs. 41-61 (1989) to which reference is made for a discussion of the factors affecting shape selectivity). Diffusional limitations are also minimized as a result of the very large pores. For these reasons, the present compositions are especially useful for catalyzing the hydrocarcking reqctions with high boiling feeds containing components with bulky molecular conficurations.

It is normally preferred to use the crystalline material in a form which has sufficient acidic functionality to give it an alpha value of 1 or more. The alpha test is described in U.S. Patent No. 3,354,078 and in J. Catalysis, 4 527 (1965); 6, 278 (1966); and 61, 395 (1980), to which reference is made for a description of the test. The experimental conditions of the test used to determine the alpha values referred to in this specification include a constant temperature of 538°C and a variable flow rate as described in detail in J. Catalysis, 61, 395 (1980). The acidic functionality may be controlled by base exchange, especially with alkali metal cations such as sodium, by steaming or by control of the silica:alumina ratio of the material.

It may be desirable to incorporate the catalyst in another material resistant to the temperature and other conditions employed in the process. Such matrix materials include synthetic and naturally occurring substances such as inorganic materials, e.g. clay, silica and metal oxides. Matrix materials may themselves possess catalytic properties, generally of an acidic nature.

The catalyst may be treated by conventional pre-sulfiding treatments, e.g. by heating in the presence of hydrogen sulfide, to convert oxide forms of the metals such as CoO or NiO to their corresponding sulfides.

The Examples below illustrate the invention. In these examples percentages are by weight unless otherwise indicated ; and the sorption data for water, cyclohexane, benzene and/or n-hexane are Equilibrium Adsorption values determined as follows.

A weighed sample of the adsorbent, after calcination at 540°C for at least 1 hour and other treatment, if necessary, to remove any pore blocking contaminants, is contacted with the desired pure adsorbate vapor in an adsorption chamber. The increase in weight of the adsorbent is calculated as the adsorption capacity of the sample in terms of grams/100 grams adsorbent based on adsorbent weight after calcination at 540°C. The present composition exhibits an equilibrium benzene adsorption capacity at 6.7 kPa (50 Torr) and 25°C of greater than 15 grams/100 grams, particularly greater than 17.5 g/100 g/ and more particularly greater than 20 g/100 g.

A preferred way to do this is to contact the desired pure adsorbate vapor in an adsorption chamber evacuated to less than 1 mm at conditions of 1.6 kPa (12 Torr) of water vapor, 5.4 kPa (40 Torr) of n-hexane or cyclohexane vapor, or 6.7 kPa) (50 Torr) of benzene vapor, at 25°C. The pressure is kept constant (within ± 0.5 mm) by addition of adsorbate vapor controlled by a manostat during the adsorption period. As adsorbate is adsorbed by the new crystal, the decrease in pressure causes the manostat to open a valve which admits more adsorbate vapor to the chamber to restore the above control pressures. Sorption is complete when the pressure change is not sufficient to activate the manostat.

Another way of doing this for benzene adsorption data is on a suitable thermogravimetric analysis system, such as a computer-controlled 990/951 duPont TGA system. The adsorbent sample is dehydrated (physically sorbed water removed) by heating at, for example, 350° or 500°C to constant weight in flowing helium. If the sample is in as-synthesized form, e.g. containing organic directing agents, it is calcined at 540°C in air and held to constant weight instead of the previously described 350° or 500°C treatment. Benzene adsorption isotherms are measured at 25°C by blending a benzene saturated helium gas stream with a pure helium gas stream in the proper proportions to obtain the desired benzene partial pressure. The value of the adsorption at 6.7 kPa (50 Torr) of benzene is taken from a plot of the adsorption isotherm.

Examples 1 to 4 concern the processing of a Statfjord heavy neutral distillate whose properties are given in Table 5 below, together with the properties of the oil after solvent dewaxing to 0°F pour point (ASTM D-97 or equivalent such as Autopour). It can be seen that the feedstock has high nitrogen content of 1500 ppm and that the distillate VI after solvent dewaxing is 53. The objective of lube hydrocracking the distillate is to increase the VI level to the 95-100 VI range after solvent dewaxing while maximizing lube yield.

Table 5

| Statfjord Heavy Neutral Distillate Properties | |
|---|---|
| Hydrogen, wt.% | 12.83 |
| Nitrogen, ppm | 1500 |
| Basic Nitrogen, ppm | 466 |
| Sulfur, wt.% | 0.72 |
| API Gravity | 22.0 |
| KV @ 100°C, mm$^2$/s | 18.52 |
| Composition, wt.% | |
| Paraffins | 18.3 |
| Naphthenes | 32.2 |
| Aromatics | 49.5 |
| Sim Dist, wt.% | |
| IBP (°F) °C | (765) 407 |
| 5 | (846) 452 |
| 10 | (880) 471 |
| 95 | (1086) 586 |
| Solvent Dewaxed Oil Properties | |
| KV @ 100°C, mm$^2$/s | 20.1 |
| VI | 53 |
| Pour Point, | |
| °C (°F) | -18 (0) |
| Lube Yield, wt.% | 87 |

Example 1

This Example provides a comparison with a zeolite catalyst (NiW/USY).

The heavy neutral distillate feed was processed over a fixed bed reactor containing a NiW/USY hydrocracking catalyst made by the following procedure: a commercial USY (PQ Corp. Z-14 USY) was combined with $Al_2O_3$ to form a mixture of 65 parts, by weight, zeolite and 35 parts alumina. Water was added to this mixture to allow the resulting catalyst to be formed into extrudates. The catalyst was then thermally treated at 1000°F in flowing air for three hours. A portion of the resultant extrudate was exchanged with aqueous solutions of ammonium nitrate and was subsequently dried overnight at 121°C (250°F). Following a three hour 538°C (1000°F) air calcination, 100% steam was introduced and the temperature maintained at 538°C (1000°F) for 10 hours. Nickel and tungsten were incorporated via incipient wetness coimpregnation using solutions of Ni(NO3)2.6H2O and $(NH4)_6H_2W_{12}O_{40}$.H2O. After drying, the extrudates were calcined for three hours in flowing air at 538°C (1000°F). The Ni and W loadings on the final catalyst were 5.8,and 16.6 wt.%, respectively.

The processing conditions were 10450-18720 kPa (1500-2700 psig) hydrogen pressure, 1335 m.1.1.$^{-1}$ (7500 SCFB) hydrogen circulation and 0.5 to 1.0 LHSV. The total liquid product of the reactor was distilled to a nominal 343°C (650°F+) cut-point and the feed was subsequently dewaxed with a 60/40 mixture of MEK/toluene. The results of these experiments are summarized in Table 6 below.

Table 6

| (LHDC with NiW/USY) | | | |
|---|---|---|---|
| Temp., °C (°F) | 371 (700) | 385 (725) | 399 (750) |
| Pressure, kPa (psig) | 18720 (2700) | 18729 (2700) | 10446 (1500) |
| LHSV | 0.5 | 0.5 | 1.0 |
| 34.3°C (650°F+) conv., wt.% | 15.2 | 29.3 | 20.0 |
| Lube Properties | | | |
| KV 100°C, mm$^2$/s | 14.7 | 10.95 | 10.68 |
| SUS @ 38°C (100°F) | 982 | 519 | 515 |
| VI | 72 | 94 | 90 |
| Pour Point, °C (°F) | -15 (5) | -15 (5) | -15 (5) |
| Lube Yield, wt.% | 80.9 | 60.1 | 63.5 |

Example 2

This example illustrates the use of a commercially available amorphous catalyst (NiW/Al2O3) without any promoter. Conditions for this example were 13890 kPa (2000 psig) hydrogen pressure, 517 n.1.1.$^{-1}$ (7500 SCFB) hydrogen circulation, and 0.5 LHSV. Table 7 below summarizes results of this experimental run.

Table 7

| (LHDC With Unfluorided NiW/alumina) | | | |
|---|---|---|---|
| Temp., °C (°F) | 399 (750) | 399 (765) | 399 (775) |
| Pressure, kPa (psig) | 13890 (2000) | 13890 (2000) | 13890 (2000) |
| LHSV | 0.5 | 0.5 | 0.5 |
| 343°C+ (650°F+)conv., wt.% | 15.5 | 21.5 | 28.2 |
| Lube Properties | | | |
| KV @ 100°C, mm$^2$/s | 11.44 | 9.83 | 8.86 |
| SUS @ 38°C (100°F) | 602 | 449 | 369 |
| VI | 83.9 | 91.7 | 97.0 |
| Pour Point, °C (°F) | -21(-5) | -21(-5) | -23 (-10) |
| Lube Yield, wt.% | 70.2 | 64.3 | 58.6 |

Example 3

This example utilizes the same catalyst as Example 2 except that the catalyst is activated by in-situ fluoriding in the fixed bed reactor to achieve a target 4-7 wt.% flourine on catalyst. This was accomplished by flouriding the catalyst with a high level (600 ppm) of flourine in the distillate for a one week period after which the flourine level is reduced to a 25 ppm level at which it is held for the remainder of the experimental run. O-fluorotoluene was used as the fluoriding agent. Processing conditions were 13890 kPa (2000 psig) hydrogen, 1335 n.1.1.$^{-1}$ (7500 SCFB) hydrogen circulation and 0.5 to 1.0 LHSV. The data from these experimental runs are given in Table 8 below.

Table 8

| (LHDC With Fluorided NiW/alumina) | | | |
|---|---|---|---|
| Temp., °C (°F) | 407 (764) | 399 (751) | 413 (775) |
| Pressure, kPa (psig) | 13890 (2000) | 13890 (2000) | 13890 (2000) |
| LHSV | 1.0 | 0.5 | 1.0 |
| 343°C+ (650°F+) conv., wt.% | 16.3 | 18.9 | 21.7 |
| Lube Properties | | | |
| KV @ 100°C, mm$^2$/s | 10.22 | 9.25 | 9.12 |

Table 8   (continued)

| (LHDC With Fluorided NiW/alumina) | | | |
|---|---|---|---|
| Lube Properties | | | |
| SUS @ 38°C (100°F) | 468 | 392 | 380 |
| VI | 93.8 | 97.5 | 98.8 |
| Pour Point, °C (°F) | -1 (30) | -7 (20) | -7 (20) |
| Lube Yield, wt.% | 74.4 | 70.0 | 68.5 |

Example 4

This example shows the benefits of using an M41S molecular sieve for selective lube hydrocracking. A NiW/MCM-41 catalyst was prepared as outlined below.

A sample of MCM-41 (40 Å) was prepared in accordance with the following method.

The following mixture was charged to an autoclave:

9965g   Cetyltrimethylammonium (CTMA) hydroxide, prepared by contacting a 29wt.% N,N,N-trimethyl-hexadecylammonium chloride solution with a hydroxide-for-halide exchange resin,

208g   Sodium aluminate,

492g   Tetramethylammonim silicate (10% aqueous solution),

1245g   Precipitated hydrated silica (Hisil ♦).

The mixture was crystallized at 100°C for 20 hrs. with stirring under autogeneous pressure. The resulting product was recovered by filtration and dried in air at ambient temperature. A sample of the product was calcined at 540°C for 1 hour in nitrogen, followed by 6 hours in air for characterization.

The calcined product had a surface area of 1120 m$^2$/g and the following equilibrium absorption capacities in grams/100 grams:

| | |
|---|---|
| $H_2O$ | 10.8 |
| Cyclohexane | >50 |
| n-hexane | >50 |
| Benzene | 67 |

The calcined product exhibited very strong relative intensity line at 38.4 ± 2.0 Å d-spacing, and weak lines at 22.6 ± 1.0, 20.0 ± 1.0, and 15.2 +1.0 Å.

The MCM-41 product was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 1000°F and maintaining that temperature in 5v/v/min air for 18 hours. Nickel and tungsten were incorporated via incipient wetness coimpregnation using solutions of $Ni(NO_3)_2.6H2O$ and $(NH_4)_6H_2W_{12}.40H_2O$. After drying overnight at 121°C (250°F), the extrudate was calcined in 5v/v/min air at 538°C (1000°F) for 3 hours. Physical and chemical properties of the NiW/MCM-41/$Al_2O_3$ catalyst are:

| | |
|---|---|
| Nickel, wt.% | 3.7 |
| Tungsten, wt.% | 9.2 |
| Sodium, ppm | 200 |
| Surface Area, m$^2$/g | 530 |
| Pore Volume, ml/g | 0.780 |
| Particle Density, g/ml | 0.883 |
| Real Density, g/ml | 2.837 |

This catalyst was used to hydrocrack the distillate at temperatures from 385 to 401°C (725 to 754°F), 13890 kpa (2000 psig) hydrogen pressure, 1335 n.1.1.$^{-1}$ (7500 SCFB) hydrogen circulation and 0.55 to 0.61 LHSV. The data from these experimental runs are summarized in Table 9 below:

Table 9

| (LHDC with NiW/MCM-41) | | | |
|---|---|---|---|
| Temp., °C (°F) | 385 (725) | 393 (739) | 401 (754) |
| Pressure, kPa (psig) | 13890 (2000) | 13890 (2000) | 13890 (2000) |
| LHSV | 0.61 | 0.54 | 0.55 |
| 343°C (650°F+) conv., wt.% | 9.3 | 20.8 | 36.0 |
| Lube Properties | | | |
| KV @ 100°C, mm²/s | 13.08 | 10.46 | 7.59 |
| SUS @ 38°C (100°F) | 772 | 468 | 261 |
| VI | 79 | 98.1 | 113.3 |
| Pour Point, °C (°F) | -9 (15) | -1 (30) | -1 (30) |
| Lube Yield, wt.% | 80.5 | 66.6 | 54.3 |

The NiW/MCM-41 catalyst was selective for upgrading the heavy neutral distillate from a raw distillate VI of 53 to a 98 VI product at a conversion level of 20.8 wt.%. The lube yield versus VI selectivity data for all the examples is represented in Figure 1. It can be seen that the unfluorided NiW/MCM-41 catalyst produces a higher VI product at a given lube yield or alternatively a higher lube yield at a given VI compared to the other unfluorided catalysts evaluated, i.e. NiW/USY or NiW/alumina. In the VI range of commercial significance (95-100 VI), the fluorided NiW/alumina catalyst has a slightly higher lube yield vs. VI selectivity compared to the NiW/MCM-41 catalyst but has the draw-back of requiring fluorine. Additionally, the activity of the NiW/MCM-41 catalyst as determined by the temperature requirement to achieve target conversion was very favorable compared to both the fluorided and unfluorided NiW/alumina catalysts. This is shown in Table 10 below where a nominal 20 wt.% 343°C+ (650°F+) conversion severity was achieved.

Table 10

| Catalyst activity | | | |
|---|---|---|---|
| | Unfluorided NiW/MCM-41 | Fluorided NiW/alumina | NiW/alumina |
| Temp., °C (°F) | 393 (739) | 407 (765) | 399 (751) |
| 343°C+ (650°F+) conv. wt.% | 20.8 | 21.5 | 18.9 |
| Pressure, kPa (psig) | 13890 (2000) | 13890 (2000) | 13890 (2000) |
| LHSV | 0.54 | 0.5 | 0.5 |

The NiW/MCM-41 catalyst was more active than both the fluorided and unfluorided NiW/alumina catalysts. Since lube hydrocracker catalysts typically age with time on-stream, the increased activity of the MCM-41 catalyst system is beneficial in terms of the potential for improvements in commercial cycle length. The following examples demonstrate the wax hydrocracking/hydroisomerization process using a heavy neutral wax feed.

Example 5

This example provides a comparison with an amorphous catalyst. The feed was a heavy neutral (HN) slack wax whose properties are listed in Table 11 below.

Table 11

| Properties of Heavy Neutral Slack Wax | |
|---|---|
| Hydrogen, wt.% | 14.56 |
| Nitrogen, ppm | 54 |
| Sulfur, wt.% | 0.102 |
| API Gravity | 34.9 |
| KV @ 100°C, mm²/s | 7.117 |
| Solvent Extractables, wt.% (D3235) | 34.05 |
| Simulated Distillation, °C (°F) | |

Table 11   (continued)

| Properties of Heavy Neutral Slack Wax | |
|---|---|
| IBP/5 | 391/429 (736/805) |
| 10/20 | 442/459 (828/858) |
| 30/40 | 471/481 (879/898) |
| 50/60 | 491/502 (916/936) |
| 70/80 | 514/528 (957/982) |
| 90/EP | 546/591 (1014/1095) |
| Dewaxed Oil Properties | |
| Nitrogen, ppm | 95 |
| Sulfur, wt.% | 0.220 |
| Pour point, C° (°F) | -18 (0) |
| KV @ 40°C, mm$^2$/s | 92.04 |
| KV @ 100°C, mm$^2$/s | 10.53 |
| VI | 96.2 |
| Composition, wt.% | |
| Paraffins | 23.2 |
| Mononaphthenes | 19.4 |
| Polynaphthenes | 37.1 |
| Aromatics | 20.3 |

The feed was processed over a fixed bed reactor containing NiW/alumina fluorided catalyst that was sulfided and then fluorided in-situ by adding 600 ppm of fluorine as orthofluorotoluene in the slack wax feed for approximately one week to target a fluorine level of 2-4 wt.% on catalyst. The operating conditions for the run were 2000 psig hydrogen pressure 1 LHSV and the reactor temperature was varied from 374° to 402°C (705° to 755°F) to cover a wide conversion range. The total liquid product from the hydrocracking step was then distilled to a nominal 343°C+ (650°F+) cut-point. The bottoms fraction was then solvent dewaxed to a target -18°C+ (0°F) pour point. The results of these runs are summarized in Table 12 below.

## Table 12
### Wax Hydrocracking - NiW/Al$_2$O$_3$ Catalyst

| Mass Bal. No. | 411 | 412 | 413 | 415 | 416 | 417 | 418 |
|---|---|---|---|---|---|---|---|
| Reactor temp, C°(°F) | 393(740) | 399(750) | 402(755) | 391(735) | 385(725) | 379(715) | 374(705) |
| 343°C- (650°F-) Conv, wt.% | 28 | 40 | 48 | 23 | 17 | 10 | 9 |
| Lube Properties | | | | | | | |
| KV @ 100°C | 5.0 | 4.3 | 4.0 | 5.1 | 5.4 | 5.9 | 6.7 |
| VI | 137 | 143 | 140 | 146 | 141 | 137 | 131 |
| Pour Point, °C(°F) | -15(5) | -18(0) | -21(-5) | -18(0) | -21(-5) | -15(5) | -9(15) |
| VI @ -18°C (0°F) Pour | 136 | 143 | 141 | 146 | 142 | 136 | 128 |
| Lube Yield, wt.% | 40 | 43 | 42 | 40 | 34 | 33 | 29 |
| Wax Conversion | 50 | 74 | 84 | 42 | 24 | 12 | 4 |

EP 0 596 022 B1

Example 6

A NiW/MCM-41 catalyst was prepared as described below.

A sample of MCM-41 (40 Å) was prepared by crystallizing the following mixture (parts by weight) in an autoclave:

48 parts Cetyltrimethylammonium (CTMA) hydroxide, prepared by contacting a 29 wt.% N,N,N-trimethyl-1-hexadecylammonium chloride solution with a hydroxide-for-halide exchange resin,1,

1 part Sodium aluminate,

24 parts Tetramethylammonim silicate (10% aqueous solution),

6 parts Precipitated hydrated silica (Hisil, ♦).

The mixture was crystallized at 100°C for 24 hours with stirring under autogeneous pressure. The resulting product was recovered by filtration and dried in air at ambient temperature. A sample of the product was calcined at 540°C for 1 hour in nitrogen, followed by 6 hours in air. The characterisitics of the product were consistent with its identity as MCM-4-1.

The MCM-41 was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours. Nickel and tungsten were incorporated by incipient wetness coimpregnation using solutions of $Ni(NO_3)_2.6H_2O$ and $(NH_4)_6H_2W_{12}.40H_2O$. After drying for 12 hours at 121°C (250°F), the extrudate was calcined in 5v/v/min air at 538°C (1000°F) for 3 hours.

The physical and chemical properties of the NiW/MCM-41/Al2O3 catalyst are set out below:

| Nickel, wt.% | 5.8 |
| Tungsten, wt.% | 29.1 |
| Sodium, ppm | 200 |
| Surface Area, m2/g | 242 |
| Packing Density, g/cc | 0.749 |

This catalyst was used for wax hydrocracking/hydroisomerization at the following process conditions: 13890 kPa abs. (2000 psig) hydrogen pressure, 1335 n.1.1.$^{-1}$ (7500 SCF/Bbl) hydrogen circulation and 1 LHSV, as in Example 1, using the same wax feed as in Example 1. The operating temperature was adjusted from 382° to 397°C (720° to 746'F) to span a range of 343°C (650°F-) boiling point conversions. Product work-up was the same as in Example 1, that is, by distillation to a 343°C+ (650°F+) cutpoint followed by solvent dewaxing to a -18°C (0°F) pour point. The results of these runs are given in Table 13.

## Table 13

### Wax HDC/HDI

| Mass Bal. No. | 82 | 84 | 85 | 86 | 87 | 88 | 90 | 92 |
|---|---|---|---|---|---|---|---|---|
| Reactor temp, °C (°F) | 382(720) | 385(725) | 385(725) | 389(733) | 389(732) | 393(740) | 397(746) | 388(731) |
| 343°C- (650°F-) Conv, wt.% | 18.4 | 21.5 | 23.6 | 29.2 | 29.8 | 41.1 | 59.5 | 35.6 |
| Lube Properties: | | | | | | | | |
| KV @ 100° | 5.81 | 5.47 | 5.30 | 4.86 | 4.857 | 4.55 | 4.29 | 5.02 |
| VI | 143.6 | 145.7 | 144.3 | 142.8 | 145.7 | 142.0 | 141.3 | 145.6 |
| Pour Point, °C (°F) | -7(20) | -15(5) | -15(5) | -15(5) | -15(5) | -12(10) | -12(10) | -15(5) |
| VI @ -18°C (0°F) Pour Pt | 139.6 | 144.7 | 143.3 | 141.8 | 144.7 | 140 | 139.3 | 144.6 |
| Lube Yield, wt.% | 39.5 | 38.6 | 40.3 | 47.6 | 44.3 | 47.5 | 43.9 | 47.2 |
| Wax Conversion | 42.3 | 49.6 | 42.7 | 65.4 | 68.7 | 81.3 | 84.7 | 65.6 |

Figure 2 of the drawings shows that the activity of the NiW/MCM-41 is higher than the activity of the fluorided NiW/alumina catatlyst. For example, at 30 wt.% 343°C- (650°F-) conversion, the fluorided catalyst required a 394°C (742°F) reactor temperature, whereas, the MCM-41 catalyst required 5.6°C (10°F) lower temperature of 389°C (732°F). In the preferred boiling point conversion range of 30-60 wt.% 343°C- (650°F-) conversion or greater, this activity advantage is beneficial in terms of lower start-of-cycle temperature and potentially longer catalyst life.

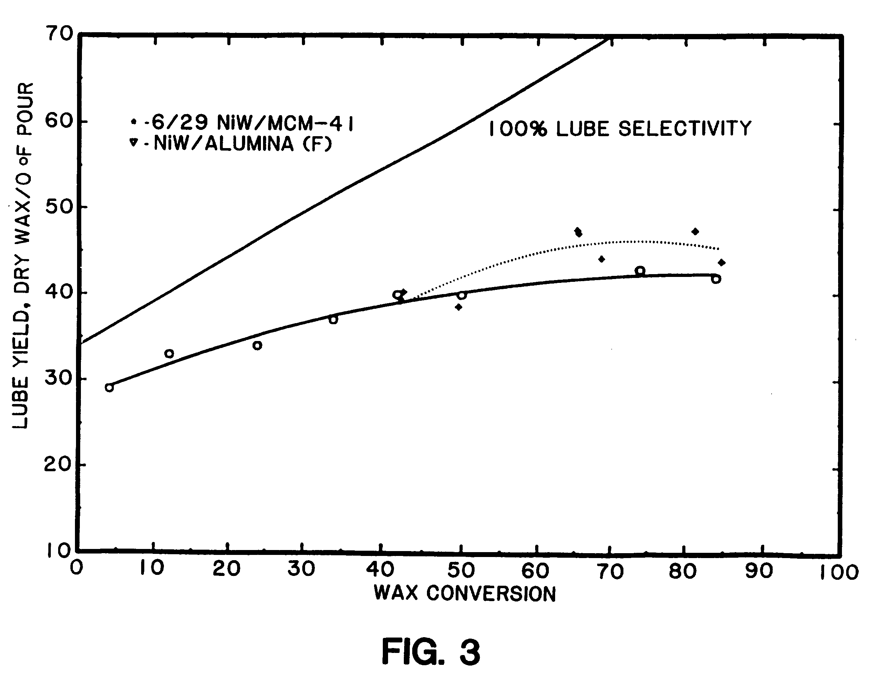

Figure 3 shows that the lube yield for the fluorided NiW/alumina and the NiW/MCM-41 catalysts are similar at low wax conversions below 50 wt.%, but at higher wax conversion the unpromoted NiW/MCM-41 catalyst has a desirable yield number benefit compared to the fluorided NiW/alumina catalyst.

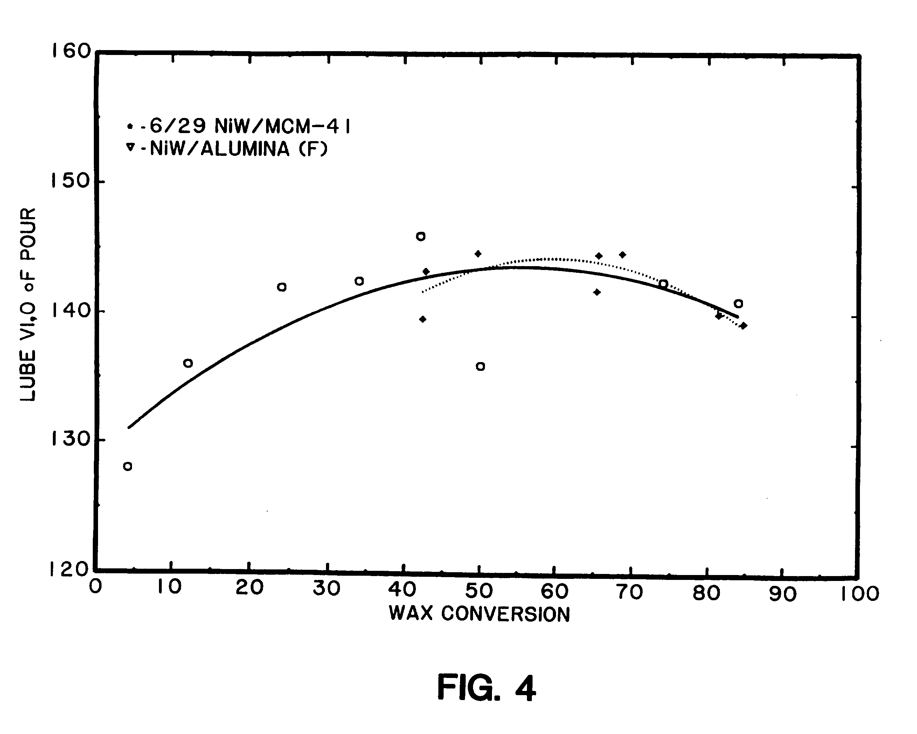

Figure 4 shows that the lube VI of the NiW/MCM-41 is comparable to the VI obtained with the fluorided NiW/ alumina catalyst.

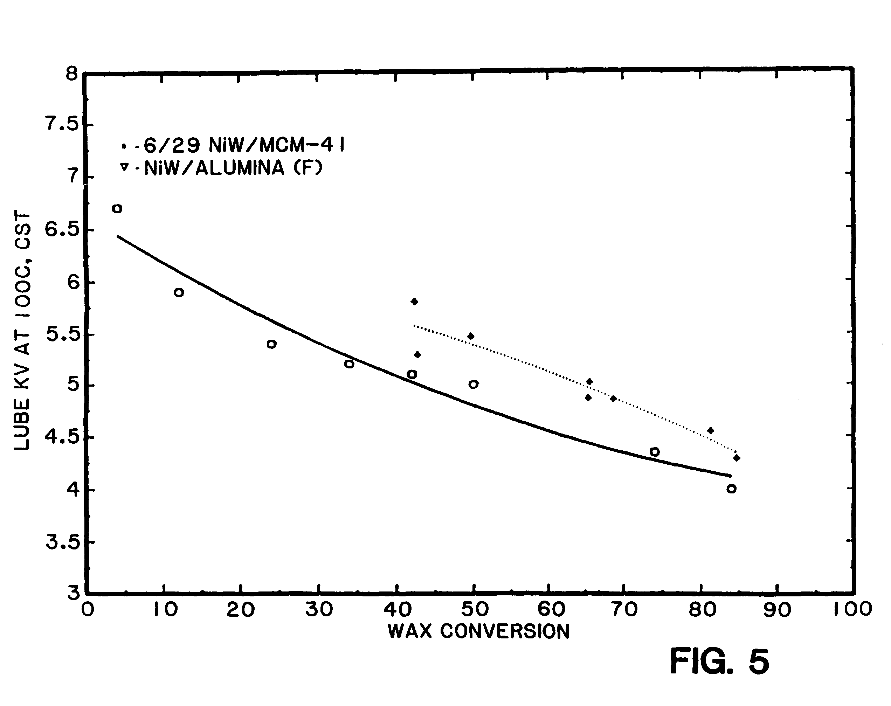

Figure 5 shows a viscosity benefit of the MCM-41 products. At a given wax conversion the lubes obtained from the MCM-41 based catalyst are higher in viscosity than the fluorided amorphous catalyst. Since the wax hydrocracking/hydroisomerization process significantly reduces the viscosity of the hydrocracked/ hydroisomerized feed, it is desirable to maintain viscosity as high as possible. For example, the target viscosity for this feed is 5 mm$^2$/s at 100°C; the fluorided alumina catalyst can achieve this at 50 wt.% wax conversion. The MCM-41 can operate at much higher wax conversion of 65 wt.% and still achieve target viscosity. There are significant commercial benefits to operating at higher wax conversion, such as, reduction in MEK loading with higher wax conversion and reduction in size of the unconverted wax recycle stream.

A hydrotreating reactor may be provided downstream of the hydroisomerization reactor to further stabilize the lube product.

## Claims

1. A process for producing lubricant products which comprises hydrocracking a feedstock comprising a high boiling hydrocarbon feed in the presence of hydrogen with a bifunctional hydrocracking catalyst having acidic functionality and hydrogenation-dehydrogenation functionality, and comprising an inorganic, non-layered, porous, crystalline phase material having pores with diameters of at least 13 Å and exhibiting, after calcination, an X-ray diffraction pattern with at least one peak with a relative intensity of 100 at a d-spacing greater than 18 A to produce a lube boiling range product.

2. A process acccording to Claim 1 in which the crystalline phase material has, after calcination, a hexagonal arrangement of unifromly-sized pores with diameters of at least 13 Å and exhibits a hexagonal electron diffraction pattern that can be indexed with a $d_{100}$ value greater than 18 Å.

3. A process according to Claim 1 in which the crystalline phase has an X-ray diffraction pattern following calcination with at least one peak whose d-spacing corresponds to the $d_{100}$ value from the electron diffraction pattern.

4. A process according to Claim 1 in which the crystalline phase exhibits a benzene adsorption capacity of greater than 15 grams benzene per 100 grams at 6.7 kPa (50 Torr) and 25°C.

5. A process according to Claim 1 in which the crystalline phase has a composition expressed as follows:

$$M_{n/q}(W_a X_b Y_c Z_d O_h)$$

wherein M is one or more ions; n is the charge of the composition excluding M expressed as oxides; q is the weighted molar average valence of M; n/q is the number of moles or mole fraction of M; W is one or more divalent elements; X is one or more trivalent elements; Y is one or more tetravalent elements; Z is one or more pentavalent elements; a, b, c, and d are mole fractions of W, X, Y, and Z, respectively; h is a number of from 1 to 2.5; and (a+b+c+d) = 1.

6. A process according to Claim 4 wherein W comprises a divalent first row transition metal or magnesium; X comprises aluminum, boron, gallium or iron; Y comprises silicon or germanium; and Z comprises phosphorus.

7. A process according to Claim 4 wherein a and d are 0 and h = 2.

8. A process according to claim 7 wherein X comprises aluminum, boron, gallium or iron and Y comprises silicon or germanium.

9. A process according to Claim 1 in which the catalyst comprises at least one metal of Groups VIA, VIIA or VIIIA of the Periodic Table.

10. A process according to Claim 1 in which the catalyst comprises at least one metal of Group VIA and at least one metal of Group VIIIA of the Periodic Table.

11. A process according to Claim 1 in which the feed is contacted with the catalyst at a pressure of from 8,400 to 30,000 kPa (hydrogen partial pressure, reactor inlet), a temperature from 288° to 441°C, and a space velocity from 0.2 to 2.0 LHSV.

12. A process according to Claim 11 in which the feed is contacted with the catalyst at a pressure of from 10,000 to 18,000 kPa (hydrogen partial pressure, reactor inlet), a temperature from 343° to 427°C, and a space velocity from 0.5 to 2.0 LHSV.

13. A process according to Claim 1 in which the hydrocracking is carried out in the absence of any promoter which increases the acid acidity of the catalyst.

14. A process according to Claim 1 in which the hydrocracking is carried out in the absence of fluorine or any fluorine compound promoter.

15. A process according to Claim 1 in which the hydrocarbon feed comprises a distillate feed having an initial boiling point of at least 343°C (650°F).

16. A process according to Claim 15 in which the feed comprises a gas oil produced by the distillation of petroleum.

17. A process according to Claim 1 in which the hydrocracked product has a viscosity index of at least 90.

18. A process according to Claim 1 in which the hydrocracked product has a viscosity index from 95 to 140.

19. A process according to Claim 1 in which the hydrocracked product is dewaxed.

20. A process according to any one of Claims 1 to 14 wherein the feedstock comprises a petroleum wax feed which is subjected to hydrocracking and hydroisomerization.

21. A process according to Claim 20 in which the feed is contacted with the catalyst at a pressure of from 7000 to 20800 kPa (1,000 to 3,000 psig) (hydrogen partial pressure, reactor inlet), a temperature from 288° to 441°C (550 to 825°F), and a space velocity from 0.2 to 4.0 LHSV.

22. A process according to Claim 21 in which the feed is contacted with the catalyst at a pressure of from 10101 to 18030 kPa (1,450 to 2,600 psig) (hydrogen partial pressure, reactor inlet), a temperature from 343° to 427°C (650° to 800°F), and a space velocity from 0.5 to 2.0 LHSV.

23. A process according to Claim 21 in which the hydrocarbon feed comprises a petroleum wax having a wax content of at least 50 wt.%.

24. A process according to Claim 23 in which the feed comprises a slack wax having an oil content of from 20 to 40 wt.%.

25. A process according to Claim 20 in which the hydrocracked product has a viscosity index of at least 135.

26. A process according to Claim 20 in which the hydrocracked product has a viscosity index from 140 to 147.

27. A process according to Claim 20 in which the hydrocracked/ hydroisomerized product is dewaxed.

**Patentansprüche**

1. Verfahren zur Herstellung von Schmiermittelprodukten, das das Hydrocracken eines Beschickungsmaterials, das eine hochsiedende Kohlenwasserstoffbeschickung umfaßt, in Gegenwart von Wasserstoff mit einem bifunktionellen Hydrocrackkatalysator umfaßt, der eine saure Funktionalität und eine Hydrierungs/Dehydrierungs-Funktionalität besitzt und ein anorganisches, ungeschichtetes, poröses Material mit kristalliner Phase umfaßt, das Poren mit Durchmessern von mindestens 13 Å hat und nach dem Kalzinieren ein Röntgenbeugungsdiagramm mit mindestens einem Peak mit einer relativen Intensität von 100 bei einem d-Abstand von mehr als 18 Å zeigt, wodurch ein Produkt im Siedebereich von Schmiermitteln erzeugt wird.

2. Verfahren nach Anspruch 1, wobei das Material mit kristalliner Phase nach dem Kalzinieren eine hexagonale Anordnung von Poren mit einheitlicher Größe mit Durchmessern von mindestens 13 Å hat und ein hexagonales Elektronenbeugungsdiagramm zeigt, das mit einem $d_{100}$-Wert von mehr als 18 Å indexiert werden kann.

3. Verfahren nach Anspruch 1, wobei die kristalline Phase nach dem Kalzinieren ein Röntgenbeugungsdiagramm mit mindestens einem Peak hat, dessen d-Abstand dem $d_{100}$-Wert aus dem Elektronenbeugungsdiagramm entspricht.

4. Verfahren nach Anspruch 1, wobei die kristalline Phase eine Adsorptionskapazität für Benzol bei 6,7 kPa (50 Torr) und 25°C von mehr als 15 Gramm Benzol/100 Gramm zeigt.

5. Verfahren nach Anspruch 1, wobei die kristalline Phase eine wie folgt ausgedrückte Zusammensetzung hat:

$$M_{n/q}(W_a X_b Y_c Z_d O_h)$$

worin M ein oder mehrere Ionen ist; n die Ladung der Zusammensetzung ist, ausgenommen M, als Oxide ausgedrückt; q die gewichtete mittlere molare Valenz von M ist, n/q die Anzahl der Mole oder der Molenbruch von M ist; W ein oder mehrere zweiwertige Elemente ist; X ein oder mehrere dreiwertige Elemente ist; Y ein oder mehrere vierwertige Elemente ist; Z ein oder mehrere fünfwertige Elemente ist; a, b, c und d die Molenbrüche von W, X, Y bzw. Z sind, h eine Zahl von 1 bis 2,5 ist; und (a+b+c+d) = 1.

6. Verfahren nach Anspruch 4, wobei W ein zweiwertiges Übergangsmetall der ersten Reihe oder Magnesium umfaßt, X Aluminium, Bor, Gallium oder Eisen umfaßt, Y Silicium oder Germanium umfaßt und Z Phosphor umfaßt.

7. Verfahren nach Anspruch 4, wobei a und d 0 sind und h = 2.

8. Verfahren nach Anspruch 7, wobei X Aluminium, Bor, Gallium oder Eisen umfaßt und Y Silicium oder Germanium umfaßt.

9. Verfahren nach Anspruch 1, wobei der Katalysator mindestens ein Metall der Gruppen VIA, VIIA oder VIIIA des Periodensystems umfaßt.

10. Verfahren nach Anspruch 1, wobei der Katalysator mindestens ein Metall aus der Gruppe VIA und mindestens ein Metall aus der Gruppe VIIIA des Periodensystems umfaßt.

11. Verfahren nach Anspruch 1, wobei die Beschickung bei einem Druck von 8.400 bis 30.000 kPa (Partialdruck von Wasserstoff, Reaktoreinlaß), einer Temperatur von 288 bis 441°C und einer Raumgeschwindigkeit von LHSV = 0,2 bis 2,0 mit dem Katalysator in Kontakt gebracht wird.

12. Verfahren nach Anspruch 11, wobei die Beschickung bei einem Druck von 10.000 bis 18.000 kPa (Partialdruck von Wasserstoff, Reaktoreinlaß), einer Temperatur von 343 bis 427°C und einer Raumgeschwindigkeit von LHSV = 0,5 bis 2,0 mit dem Katalysator in Kontakt gebracht wird.

13. Verfahren nach Anspruch 1, wobei das Hydrocracken ohne irgendeinen Promotor erfolgt, der die saure Aktivität des Katalysators erhöht.

14. Verfahren nach Anspruch 1, wobei das Hydrocracken ohne einen Promotor aus Fluor oder einer Fluorverbindung erfolgt.

15. Verfahren nach Anspruch 1, wobei die Kohlenwasserstoffbeschickung eine Destillatbeschickung mit einem Anfangssiedepunkt von mindestens 343°C (650°F) umfaßt.

**16.** Verfahren nach Anspruch 15, wobei die Beschickung ein durch die Destillation von Erdöl erzeugtes Gasöl umfaßt.

**17.** Verfahren nach Anspruch 1, wobei das hydrogecrackte Produkt einen Viskositätsindex von mindestens 90 hat.

**18.** Verfahren nach Anspruch 1, wobei das hydrogecrackte Produkt einen Viskositätsindex von 95 bis 140 hat.

**19.** Verfahren nach Anspruch 1, wobei das hydrogecrackte Produkt entparaffiniert wird.

**20.** Verfahren nach einem der Ansprüche 1 bis 14, wobei das Beschickungsmaterial eine Erdölwachsbeschickung umfaßt, die dem Hydrocracken und der Hydroisomerisierung unterzogen wird.

**21.** Verfahren nach Anspruch 20, wobei die Beschickung bei einem Druck von 7.000 bis 20.800 kPa (1000 bis 3000 psig) (Partialdruck von Wasserstoff, Reaktoreinlaß), einer Temperatur von 288 bis 441°C (550 bis 825°F) und einer Raumgeschwindigkeit von LHSV = 0,2 bis 4,0 mit dem Katalysator in Kontakt gebracht wird.

**22.** Verfahren nach Anspruch 21, wobei die Beschickung bei einem Druck von 10.101 bis 18.030 kPa (1450 bis 2600 psig) (Partialdruck von Wasserstoff, Reaktoreinlaß), einer Temperatur von 343 bis 427°C (650 bis 800°F) und einer Raumgeschwindigkeit von LHSV = 0,5 bis 2,0 mit dem Katalysator in Kontakt gebracht wird.

**23.** Verfahren nach Anspruch 21, wobei die Kohlenwasserstoffbeschickung Erdölwachs mit einem Wachsgehalt von mindestens 50 Gew.-% umfaßt.

**24.** Verfahren nach Anspruch 23, wobei die Beschickung Rohparaffin mit einem Ölgehalt von 20 bis 40 Gew.-% umfaßt.

**25.** Verfahren nach Anspruch 20, wobei das hydrogecrackte Produkt einen Viskositätsindex von mindestens 135 hat.

**26.** Verfahren nach Anspruch 20, wobei das hydrogecrackte Produkt einen Viskositätsindex von 140 bis 147 hat.

**27.** Verfahren nach Anspruch 20, wobei das hydrogecrackte/hydroisomerisierte Produkt entparaffiniert wird.


## Revendications

**1.** Un procédé de fabrication de produits lubrifiants qui comprend l'hydrocraquage d'une charge comprenant une charge d'hydrocarbure à point d'ébullition élevé en présence d'hydrogène à l'aide d'un catalyseur d'hydrocraquage bifonctionnel présentant une fonctionnalité acide et une fonctionnalité d'hydrogénation-déshydrogénation, et comprenant un matériau en phase cristalline et poreux, non stratifié inorganique, dont les pores ont des diamètres d'au moins 13 Å et présentant après calcination un spectre de diffraction aux rayons-X renfermant au moins un pic d'une intensité réactive de 100 pour une distance d supérieur à 18 Å, en vue d'obtenir un produit bouillant dans l'intervalle de lubrifiant.

**2.** Un procédé selon la revendication 1 dans lequel le matériau en phase cristalline présente après calcination une disposition hexagonale des pores de dimension uniforme de diamètres d'au moins 13 Å et présentant un spectre de diffraction électronique hexagonale qui peut être indexé à une valeur $d_{100}$ supérieure à 18 Å.

**3.** Un procédé selon la revendication 1 dans lequel la phase cristalline a un spectre de diffraction aux rayons-X après calcination présentant au moins un pic dont la distance d correspond à la valeur $d_{100}$ tirée du spectre de diffraction électronique.

**4.** IJn procédé selon la revendication 1, dans lequel la phase cristalline présente une capacité d'adsorption de benzène supérieure à 15 g de benzène pour 100 g à 6,7 kPa (50 Torr) et 25°C.

**5.** Un procédé selon la revendication 1 dans lequel la composition de la phase cristalline peut s'exprimer comme suit :

$$M_{n/q} (W_a X_b Y_c Z_d O_h)$$

dans laquelle M représente un ou plusieurs ions ; n est la charge de la composition en excluant M, exprimée en oxydes ; q est la valence en moyenne pondérée de M; n/q est le nombre de moles ou fraction moléculaire, de M; W représente un ou plusieurs éléments bivalents; X représente un ou plusieurs éléments trivalents ; Y représente un ou plusieurs éléments tétravalents ; Z représente un ou plusieurs éléments penta-valents ; a, b, c et d sont respectivement des fractions molaires de W, X, Y, et Z ; h est un nombre de 1 à 2,5 ; et (a+b+c+d) = 1.

6. Un procédé selon la revendication 4 dans lequel W comprend un métal de transition divalent de la première rangée ou du magnésium ; X comprend aluminium, bore, gallium ou fer ; Y comprend silicium ou germanium; et Z comprend le phosphore.

7. Un procédé selon la revendication 4 dans lequel a et d sont égal 0 et h = 2.

8. Un procédé selon la revendication 7 dans lequel X comprend aluminium, bore, gallium ou fcr et Y comprend silicium ou germanium.

9. Un procédé selon la revendication 1 dans lequel le catalyseur comprend au moins un métal des groupes VIA, VIIA ou VIIIA du tableau périodique des éléments.

10. Un procédé selon la revendication 1 dans lequel le catalyseur comprend au moins un métal du groupe VIA et au moins un métal du groupe VIIIA du tableau périodique des éléments.

11. Un procédé selon la revendication 1 dans lequel la charge est mise au contact du catalyseur à une pression de 8 400 à 30 000 kPa (pression partielle d'hydrogène, entrée du réacteur), une température de 288° à 441°C, et une vitesse spatiale de 0,2 à 2,0 VSHL.

12. Un procédé selon la revendication 11 dans lequel la charge est mise en contact du catalyseur à une pression de 10 000 à 18 000 kPa (pression partielle d'hydrogène, entrée du réacteur), une température de 343° 0 427°C, et une vitesse spatiale de 0.5 à 2,0 VSHL.

13. Un procédé selon la revendication 1 dans lequel l'hydrocraquage est effectué en l'absence de tout dopant qui augmente l'acidité acide du catalyseur.

14. Un procédé selon la revendication 1 dans lequel l'hydrocraquage est effectué en l'absence de fluor ou de tout promoteur de dérivé de fluor.

15. Un procédé selon la revendication 1 dans lequel la charge d'hydrocarbure comprend une charge de distillat dont le point initial d'ébullition est au moins égal à 343°C (650°F).

16. Un procédé selon la revendication 15 dans lequel la charge comprend un gas oil obtenu par distillation du pétrole.

17. Un procédé selon la revendication 1 dans lequel le produit hydrocraqué présente un indice de viscosité au moins de 90.

18. Un procédé selon la revendication 1 dans lequel le produit hydrocraqué présente un indice de viscosité de 95 à 140.

19. Un procédé selon la revendication 1 dans lequel le produit est hydrocraqué et déparaffiné.

20. Un procédé selon l'une quelconque des revendications 1 à 14 dans lequel la charge comprend une charge de paraffine de pétrole qui est soumise à hydrocraquage et hydroisomérisation.

21. Un procédé selon la revendication 20 dans lequel la charge est mise au contact du catalyseur à une pression de 7 000 à 20 800 kPa (1 000 à 3 000 psig) (pression partielle d'hydrogène, entrée du réacteur), une température de 288° à 441°C (550° à 825°F) et une vitesse spatiale de 0,2 à 4,0 VSHL.

22. Un procédé selon la revendication 20 dans lequel la charge est mise au contact du catalyseur à une pression de 10 101 à 18 030 kPa (1 450 à 2 600 psig) (pression partielle d'hydrogène, entrée du réacteur), une température de 343° à 427°C (650° à 800°F) et une vitesse spatiale de 0,5 à 2,0 VSHL.

23. Un procédé selon la revendication 21 dans lequel la charge d'hydrocarbure comprend une paraffine de pétrole dont la teneur en paraffine est au moins égale à 50% en poids.

24. Un procédé selon la revendication 23 dans lequel la charge comprend une paraffine non déshuilée présentant une teneur en huile de 20 à 40% en poids.

25. Un procédé selon la revendication 20 dans lequel le produit hydrocraqué présente un indice de viscosité d'au moins 135.

26. Un procédé selon la revendication 20 dans lequel le produit hydrocraqué présente un indice de viscosité de 140 à 147.

27. Un procédé selon la revendication 20 dans lequel le produit hydrocraqué/hydroisomérisé est déparaffiné.

FIG. 1

FIG. 2

EP 0 596 022 B1

FIG. 3

EP 0 596 022 B1

FIG. 4

FIG. 5

EP 0 596 022 B1